# EUROPÄISCHE PATENTSCHRIFT

(11) **EP 4 071 503 B1**
(45) Veröffentlichungstag und Bekanntmachung des Hinweises auf die Patenterteilung: **15.02.2023**
(21) Anmeldenummer: 21167723.2
(22) Anmeldetag: 09.04.2021
(51) Int. Cl.: G01S 7/481, G01S 17/42, G01S 7/497

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION DES OBJETS

(43) Veröffentlichungstag der Anmeldung: 12.10.2022
(73) Patentinhaber: SICK AG, 79183 Waldkirch (DE)
(72) Erfinder: BRENDER, Tamara, 79111 Freiburg (DE); BUSER, Roger, 79106 Freiburg (DE)

(56) Entgegenhaltungen:
- EP-A1- 2 388 619
- US-A1- 2011 235 018

## Beschreibung

Die Erfindung betrifft einen optoelektronischen Sensor, insbesondere einen Laserscanner, und ein Verfahren zur Erfassung von Objekten in einem Überwachungsbereich nach dem Oberbegriff von Anspruch 1 beziehungsweise 14.

Optoelektronische Systeme und besonders Laserscanner eignen sich für Erfassungen und Abstandsmessungen, die einen großen horizontalen Winkelbereich des Messsystems erforderlich machen. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

Es ist bekannt, das Sendelicht eines Laserscanners mit einem Sendetubus abzuschirmen, um zu verhindern, dass das Sendelicht auf den Empfangspfad überspricht, unter anderem ein Frontscheibenreflex. Ein solcher Sendetubus wird beispielsweise in der DE 44 12 044 A1 offenbart. Die EP 3 699 638 A1 ergänzt einen Sendetubus um mindestens ein Umlenkelement, das Empfangslicht an dem Sendetubus vorbei zum Lichtempfänger führt. Die EP 3 165 958 A1 beschreibt eine entsprechende Abschirmung für einen 3D-Scanner, dessen Scanbewegung über zwei Rotationsachsen erfolgt.

Neben Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

In dem Sicherheitslaserscanner der DE 43 40 756 A1 ist als ein Teilelement zur Erfüllung der Sicherheitsnormen ein Referenzziel vorgesehen, das in einem rückwärtigen Scanwinkel mit jeder Umdrehung des Drehspiegels abgetastet wird. Damit kann in einem Funktionstest festgestellt werden, ob die Messkette von Lichtsender über die Ablenkung und den Lichtempfang bis zur Lichtlaufzeitmessung noch fehlerfrei arbeitet. Ist das nicht der Fall, wird die von dem Sicherheitslaserscanner überwachte Maschine in einen sicheren Zustand überführt. Referenzziele finden auch in Laserscannern Verwendung, die nicht in der Sicherheitstechnik eingesetzt sind. Dort wird eine fehlerfreie Funktion ebenfalls erwartet, wenn auch unter weniger strengen Rahmenbedingungen, um beispielsweise Wartungsbedarf festzustellen.

Ein Referenzziel dient außerdem dazu, die Lichtlaufzeitmessung des Laserscanners zu kalibrieren. Mit der Messung auf das Referenzziel kann auf eine wohldefinierte Entfernung Null korrigiert werden. Die Referenzmessung unterliegt sehr weitgehend denselben Driften durch Temperatur und Bauteilalterung wie die eigentliche Messung, so dass durch anfängliche oder besser zyklische Kalibrierung die Messgenauigkeit erhöht wird.

Es entstehen nun zusätzliche Herausforderungen, wenn ein Sendetubus mit einem Referenzziel kombiniert werden soll. Es ist natürlich möglich, das Referenzziel außerhalb des Radius des Sendetubus unterzubringen. Im Zuge der fortschreitenden Miniaturisierung steht jedoch in dem Sensor immer weniger Bauraum zur Verfügung, und daher ist eine Radiusvergrößerung unerwünscht. Ferner ist eine einfache direkte Reflexion des Referenzziels mit einem einfachen Reflektor nicht zielführend, weil der Sendelichtstrahl dann in den Sendetubus zurückgeworfen und nirgends detektierbar würde. Umlenkende Referenzziele sind an sich bekannt, nicht aber für die angesprochene Problematik mit einem Sendetubus geeignet und auch nicht in kompakter Bauform gestaltet. In der DE 42 19 260 C2 wird eine lichtelektrische Vorrichtung mit einem Testobjekt vorgestellt, in der das Sendelicht zunächst auf eine Ablenkvorrichtung, zurück zu dem zwischen Lichtsender und Lichtempfänger angeordneten Testobjekt, nach dortiger zweifacher Reflexion mit einem Versatz zurück zur Ablenkvorrichtung und dann zu dem Lichtempfänger geführt wird. Dieses Vorgehen wäre mit einem Sendetubus ganz unverträglich.

Die DE 43 41 080 C1 und ähnlich die DE 196 47 152 A1 oder die EP 2 112 527 A2 ersetzen das einfache Referenzziel der DE 43 40 756 A1 durch ein strahlumlenkendes Referenzziel mit zwei im Winkel von 90° zueinanderstehenden Flächen, so dass Empfangslicht während der Referenzmessung mit einem Versatz zurückkehrt. Die DE 10 2017 107 667 A1 erweitert das bisher prismenartige Referenzziel zu einer Art Dachkantprisma, bei dem eine Seitenfläche zur zusätzlichen Strahlaufweitung nochmals in zwei Teilflächen unterteilt wird. Keines dieser Dokumente befasst sich aber mit einem Sendetubus.

Die US 2011/0235018 A1 offenbart einen Laserscanner mit einem mitdrehenden zylindrischen Abschirmelement des Sendelichts und einem Referenzziel im Rückraum.

Aus der EP 2 388 619 A1 ist ein Laserscanner mit rotierender Sende-/Empfangseinheit und einem Fenster von dessen Gehäuse bekannt, über das die Sendestrahlen aus dem Laserscanner herausgeführt sind. Der Messkopf weist einen Tubus zur Führung der Sende- und Empfangslichtstrahlen oder zwei Tuben zu deren getrennter Führung auf. An dem Fenster ist ein Referenzobjekt als Ziel für Referenzmessungen zur Funktionsprüfung angeordnet.

Es ist daher Aufgabe der Erfindung, die Referenzmessung in einem gattungsgemäßen Sensor zu verbessern.

Diese Aufgabe wird durch einen optoelektronischen Sensor, insbesondere einen Laserscanner, und ein Verfahren zur Erfassung von Objekten in einem Überwachungsbereich nach Anspruch 1 beziehungsweise 14 gelöst. Ein Lichtsender erzeugt Sendelicht und sendet es in den Überwachungsbereich aus. Mit Hilfe einer beweglichen Ablenkeinheit wird eine Scanbewegung erzeugt, vorzugsweise eine Drehbewegung, mit der das Sendelicht periodisch in unterschiedliche Ablenkwinkel ausgesandt wird. Das Sendelicht wird als remittiertes Sendelicht wieder empfangen, nachdem es zumindest teilweise im Überwachungsbereich von einem Objekt zurückgeworfen wurde. Es entsteht somit Empfangslicht, in dem sich das remittierte Sendelicht mit Fremdlicht überlagert. Wird kein Objekt angetastet, so bildet nur Fremdlicht das Empfangslicht. Ein Lichtempfänger wandelt das Empfangslicht in ein Empfangssignal. Eine Steuer- und Auswertungseinheit wertet das Empfangssignal aus, um eine optisch erfassbare Information über das Objekt zu gewinnen, wie eine binäre Anwesenheitsinformation, einen Abstand, eine Position oder auch eine Farbe oder ein Remissionsvermögen.

Eine Abschirmeinrichtung verhindert, dass Sendelicht auf den Lichtempfänger überspricht, also beispielsweise an der Ablenkeinheit oder einer Frontscheibe in den Lichtempfänger reflektiert wird, ohne den Sensor verlassen zu haben und dort im Überwachungsbereich auf ein Objekt zu treffen. Die Abschirmeinrichtung ist mindestens teilweise um den Strahlengang des Sendelichts angeordnet, so dass das Sendelicht in einigen und vorzugsweise allen Richtungen davon umgeben ist. Zumindest ein Teil der Abschirmeinrichtung bewegt sich mit der Ablenkeinheit.

Mit Hilfe eines Referenzziels, das in zumindest einer Stellung der Ablenkeinheit im Strahlengang des Sendelichts angeordnet ist, führt die Steuer- und Auswertungseinheit einen Funktionstest durch oder (re-)kalibriert ihre Messung. Vorzugsweise wird das Referenzziel in einem Winkelbereich der Ablenkeinheit getroffen, der ohnehin wegen Halterungen und dergleichen einen rückwärtigen Totbereich der eigentlichen Messung darstellt. Das Referenzziel liefert ein Empfangssignal analog zu einem Objekt im Überwachungsbereich, wird jedoch verlässlich in der bestimmten Stellung der Ablenkeinheit angetastet und liefert ein reproduzierbares Referenzsignal. Ein Funktionstest dient dazu, vorzugsweise zyklisch mögliche Fehler in dem Sensor aufzudecken, indem eine Erwartungshaltung an das Referenzsignal überprüft wird. Da das Ergebnis der Referenzmessung auf der Signalkette von dem Lichtsender über die Ablenkeinheit und den Lichtempfänger bis zur Auswertung beruht, ist der Funktionstest umfassend. Kalibrierung wiederum bedeutet, dass die Referenzmessung für eine Parametrierung der Auswertung oder eine Korrektur der Messergebnisse herangezogen wird, insbesondere zum Ausgleich von Driften durch Temperatureffekte oder Alterung. Die Referenzmessung kann nur für den Funktionstest, nur für eine Kalibrierung oder für beides genutzt werden. Diese Funktionen einer Referenzmessung wurden einleitend bereits kurz erläutert.

Die Erfindung geht von dem Grundgedanken aus, das Referenzziel und die Abschirmeinrichtung aufeinander abzustimmen. Das Referenzziel wird in seiner Bauform und/oder Anordnung an die Abschirmeinrichtung derart angepasst, dass es der bewegten oder rotierenden Abschirmeinrichtung nicht im Weg ist. Es ist daher möglich, die Abschirmeinrichtung ganz nahe an eine Frontscheibe des Sensors heranzuführen. Dazu ist das Referenzziel insbesondere flach ausgelegt und/oder versenkt angeordnet, was im Folgenden anhand von vorteilhaften Ausführungsformen näher erläutert wird.

Die Erfindung hat den Vorteil, dass zugleich eine wirkungsvolle Unterdrückung von Übersprechen aus dem Sendekanal in den Empfangskanal und eine Referenzmessung ermöglicht wird. Da die Abschirmeinrichtung das Referenzziel ganz nahe oder dicht passieren kann, ist über alle Ablenkwinkel eine praktisch lückenlose Abschirmung erreicht. Dafür wird aber kein oder jedenfalls so gut wie kein zusätzlicher Bauraum in radialer Richtung benötigt. Die Bauform des Sensors kann sehr kompakt bleiben. Herkömmliche Referenzziele wären dafür ungeeignet. Entweder könnten sie das Licht nicht seitlich an der Abschirmeinrichtung zurückführen, so dass eine Referenzmessung in Kombination mit einer Abschirmeinrichtung kaum möglich wäre, oder sie beanspruchen erheblichen radialen Bauraum, der jedenfalls in einem miniaturisierten Sensor nicht zur Verfügung steht.

Die Abschirmeinrichtung ist bevorzugt als ein das Sendelicht mindestens teilweise umgebender Sendetubus ausgebildet. Der Sendetubus kann eine Form ähnlich einem verkürzten Periskop aufweisen, das aber nur sendeseitig genutzt wird. In einer L-förmigen Ausführungsform führt ein erster Arm von dem Lichtsender zu der Ablenkeinheit und ein zweiter Arm rechtwinklig dazu von der Ablenkeinheit zur Frontscheibe. Zumindest der zweite Arm bewegt sich mit der Ablenkeinheit. Die Abschirmeinrichtung umgibt vorteilhafterweise den gesamten internen Pfad des Sendelichts. Vorzugsweise ist in dem Sendetubus eine Sendeoptik angeordnet.

Lichtsender und Lichtempfänger sind bevorzugt koaxial angeordnet, insbesondere liegt die Abschirmeinrichtung mittig im Strahlengang des remittierten Sendelichts. Besonders bevorzugt befindet sich der Sendetubus zentriert im Empfangslichtpfad, um eine symmetrische Anordnung zu erhalten und Übersprechen wirksam zu verhindern.

Das Referenzziel weist bevorzugt mindestens ein Umlenkelement zum Zurückwerfen des Sendelichts mit einem seitlichen Versatz auf. Damit wird zum einen der Abschirmeinrichtung ausgewichen, in der ansonsten zumindest große Teile des als Referenzsignal zu nutzenden, zurückgeworfenen Sendelichts verloren ginge. Dank des seitlichen Versatzes kehrt das Sendelicht als Referenzlicht im Empfangsstrahlengang außen an der Abschirmeinrichtung zurück. Ferner ist das Referenzziel vorzugsweise in einem hinteren Totbereich der Abtastung untergebracht, wo es abschattende Elemente gibt, wie etwa einen Leiterkartensteg, der Lichtempfänger und/oder Lichtsender trägt. Die Umlenkung kann solchen abschattenden Elementen ausweichen.

Das Referenzziel weist bevorzugt ein erstes Umlenkelement zum Zurückwerfen des Sendelichts mit einem seitlichen Versatz in Bewegungsrichtung der Ablenkeinheit und ein zweites Umlenkelement zum Zurückwerfen des Sendelichts mit einem seitlichen Versatz entgegen der Bewegungsrichtung der Ablenkeinheit auf. In dieser Ausführungsform wird das Sendelicht vorteilhaft zu beiden Seiten außen an der Abschirmeinrichtung zurückgeführt. Eine zusätzliche Umlenkung oben oder unten an der Abschirmeinrichtung wäre sinnlos, da das Licht hier auf dem Weg zum Lichtempfänger von der Abschirmeinrichtung abgeschattet würde. Mit einem zusätzlichen Umlenkelement gemäß EP 3 699 638 A1 wäre das aber denkbar.

Das Umlenkelement weist bevorzugt eine erste Kontur zur seitlichen Ablenkung und eine dagegen seitlich versetzte zweite Kontur zum Zurückwerfen des Sendelichts auf. Die beiden Konturen, die beispielsweise schräg stehende Flächen sind, sind zueinander beispielsweise mit einem flachen Verbindungsstück beabstandet. Die erste Kontur lenkt das Sendelicht zur Seite, die zweite Kontur nach dem seitlichen Versatz wieder zurück in Richtung Ablenkeinheit, nun jedoch außen an der Abschirmeinrichtung und damit auf dem Lichtweg des Empfangsstrahlengangs zu dem Lichtempfänger. Ein solches Umlenkelement erzeugt vorteilhaft nur in einem kleinen Winkelbereich ein Referenzsignal. Lichtanteile, die nicht auf die Konturen fallen, werden im Lichtempfänger nicht registriert. Die erläuterten Konturen des Umlenkelements können das einzige Umlenkelement oder das erste und/oder zweite Umlenkelement bei zwei zu beiden Seiten in Bewegungsrichtung der Ablenkeinheit und gegen die Bewegungsrichtung der Ablenkeinheit angeordneten Umlenkelementen betreffen.

Der Sensor weist eine umlaufende Frontscheibe für den Lichtaustritt des Sendelichts auf, wobei insbesondere die Abschirmeinrichtung fast berührend an die Frontscheibe herangeführt ist. Die Frontscheibe schützt das Sensorinnere und ist zumindest in den Durchtrittsbereichen des Sendelichts transparent. Vorzugsweise dringt das Empfangslicht durch dieselbe Frontscheibe wieder in den Sensor ein, wofür dann natürlich auch der Durchtrittsbereich des Empfangslichts transparent ist, soweit die Durchtrittsbereiche nicht ohnehin identisch sind. Die Frontscheibe ist entsprechend einer Drehbewegung der Ablenkeinheit bevorzugt rotationssymmetrisch ausgebildet, insbesondere als Zylinder oder Kegelstumpf, wobei andere Konturen in der Höhenrichtung senkrecht zur Ablenkung auch vorstellbar sind. Die Frontscheibe kann oben geschlossen sein und dann als eine Art Haube den oberen Teil eines Sensorgehäuses bilden. Wenn die Abschirmeinrichtung die Frontscheibe nahezu berührt, also nur ein sehr kleiner Luftspalt verbleibt, der eine Reibung der Scanbewegung vermeidet, ist die Abschirmung besonders wirksam. Wegen der erfindungsgemäßen Ausgestaltung beziehungsweise Anordnung des Referenzziels ist auch im Bereich des Referenzziels ein ganz dichtes Vorbeibewegen ermöglicht.

Das Referenzziel ragt bevorzugt nicht über eine Innenkontur der Frontscheibe hinaus nach innen und setzt insbesondere die Innenkontur der Frontscheibe fort. Das Referenzziel bildet damit keinerlei oder jedenfalls nur ein ganz geringes Hindernis, die Abschirmeinrichtung nahe an die Frontscheibe heranzuführen.

Das Referenzziel ist bevorzugt in einer Scanrichtung der Bewegung der Ablenkeinheit einer Krümmung der Frontscheibe und in einer Höhenrichtung senkrecht dazu einer Neigung der Frontscheibe entsprechend geformt. Das Referenzziel folgt demnach in seiner Geometrie oder Formgebung der Frontscheibe in einer oder beiden Dimensionen, d.h. in Scanrichtung oder Azimut beziehungsweise in Höhenrichtung oder Elevation. Dabei ist vorzugsweise die Frontscheibe, und in Folge das Referenzziel, im Azimut kreisrund gekrümmt und in Elevation gerade, aber geneigt, wobei kompliziertere Konturen in Azimut wie Elevation ebenfalls denkbar wären.

Das Referenzziel ist mindestens teilweise in einer inneren Tasche der Frontscheibe versenkt angeordnet. Diese Tasche, Nut oder Ausnehmung erlaubt dem Referenzziel eine zumindest minimale Dickenausdehnung, ohne dadurch die Abschirmeinrichtung in ihrer Bewegung zu behindern. Die Dicke der Frontscheibe ist aus Gründen der Herstellung und des Bauraums begrenzt, so dass vorzugsweise die Formgebung eines bevorzugt flachen Referenzziels mit einer versenkten Anordnung in einer inneren Tasche der Frontscheibe kombiniert wird.

Das Referenzziel weist bevorzugt Kanten und die innere Tasche Hinterschneidungen auf, mit denen das Referenzziel in der inneren Tasche gehalten wird. Das Referenzziel kann dann sehr einfach mit seinen Kanten in die Hinterschneidungen eingefädelt oder eingerastet werden und gelangt so richtig justiert und ohne weitere Hilfsmittel an seinen Bestimmungsort. Ein zusätzliches Befestigen oder Verkleben bleibt möglich.

Die Frontscheibe weist bevorzugt einen vertikalen, aus einer umlaufenden Kontur herausragenden Steg auf, in dem die innere Tasche angeordnet ist. Dieser Steg stört die Rotationssymmetrie der Frontscheibe, ist jedoch vielfach aus mechanischen Gründen und für Funktionen wie das Unterbringen einer Motorhalterung ohnehin vorhanden. Dies wird in dieser Ausführungsform genutzt, um die innere Tasche unterzubringen oder einzubetten. Zusätzliche Anpassungen oder Erweiterungen sind dann nicht erforderlich. In dem Steg können zudem Verbindungsleitungen des Sensors angeordnet werden, etwa Versorgungs- und Steuerungsleitungen für einen Motor oder einen Encoder, der eine Winkelstellung der Ablenkeinheit misst.

Das Referenzziel weist bevorzugt eine hinreichende Ausdehnung auf und ist derart angeordnet, dass damit Kanten des Steges verdeckt sind. Aus diesen Kanten könnte Streulicht auskoppeln, das die Frontscheibe an anderer Stelle eingefangen hat. Durch die Überdeckung verhindert das Referenzziel das Eindringen von solchem Streulicht in den Empfangsstrahlengang.

Das Referenzziel ist bevorzugt flach ausgebildet. Noch bevorzugter ist es trotzdem umlenkend gestaltet wie oben beschrieben und wirft das Sendelicht nicht einfach direkt zurück, wo es jedenfalls mit merklichen Anteilen in der Abschirmeinrichtung verloren ginge. Eine flache Geometrie oder flache Ausführung bedeutet insbesondere, dass die in Richtung des einfallenden Sendelichts zu messende Dicke sehr deutlich kleiner bis praktisch vernachlässigbar gegenüber der Ausdehnung quer zu dem einfallenden Sendelicht ist. Bevorzugt bleibt die Dicke in der Größenordnung von derjenigen einer Frontscheibe, und in bevorzugter Anordnung in einer inneren Tasche eines Steges der Frontscheibe geringer als dessen Dickenausdehnung.

Die bewegliche Ablenkeinheit ist bevorzugt als Drehspiegel mit einer Spiegelfläche ausgebildet. Typischerweise steht der Drehspiegel in einem Winkel von 45°, so dass Sendelicht längs der Drehachse erzeugt beziehungsweise Empfangslicht längs der Drehachse empfangen und durch die 90°-Umlenkung mit dem Drehspiegel eine Ebene senkrecht zu der Drehachse abgetastet wird. Die Spiegelfläche ist bevorzugt die einzige Spiegelfläche des Drehspiegels. Es handelt sich also um kein Polygonspiegelrad. Es sind alternativ Laserscanner bekannt, in denen sich der gesamte Messkopf mit Lichtsender und Lichtempfänger dreht.

Die Steuer- und Auswertungseinheit ist bevorzugt dafür ausgebildet, aus einer Lichtlaufzeit zwischen Aussenden des Sendelichts und Empfangen des remittierten Sendelichts einen Abstand des Objekts zu bestimmen. Damit entsteht ein entfernungsmessender Sensor, und es wird als Messinformation über das Objekt dessen Abstand bestimmt.

Das Referenzziel wird in einer solchen Ausführungsform vorzugsweise genutzt, um die Lichtlaufzeitmessung auf eine Entfernung Null zu kalibrieren beziehungsweise anhand der Referenzmessungen zu korrigieren. So werden interne Laufzeiten und Driften vor allem aufgrund von Temperatur und Alterung der Bauteile ausgeglichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners mit Sendetubus und Referenzziel;
- Fig. 2: eine dreidimensionale Ansicht eines Sendetubus' eines Laserscanners;
- Fig. 3: eine dreidimensionale Außenansicht einer Frontscheibe eines Laserscanners;
- Fig. 4: eine Draufsicht auf die Frontscheibe gemäß Figur 3;
- Fig. 5: eine Schnittdarstellung eines Referenzziels für einen Laserscanner;
- Fig. 6: mit Darstellung des Referenzziels gemäß Figur 5 in nun abgeflachte Ausführung;
- Fig. 7: eine Darstellung des Strahlengangs an dem Referenzziel gemäß Figur 6 in einer Winkelstellung zu Beginn des Überstreichens des Referenzziels;
- Fig. 8: eine Darstellung des Strahlengangs an dem Referenzziel gemäß Figur 6 in einer zentralen Winkelstellung während des Überstreichens des Referenzziels;
- Fig. 9: eine Darstellung des Strahlengangs an dem Referenzziel gemäß Figur 6 in einer Winkelstellung gegen Ende des Überstreichens des Referenzziels;
- Fig. 10: eine schematische aufgeschnittene Darstellung einer Frontscheibe zur Veranschaulichung einer möglichen Anordnung des Referenzziels;
- Fig. 11: eine Darstellung einer Halterung des Referenzziels in einem Steg der Frontscheibe eines Laserscanners; und
- Fig. 12: eine Darstellung einer weiteren Ausführungsform des Referenzziels.

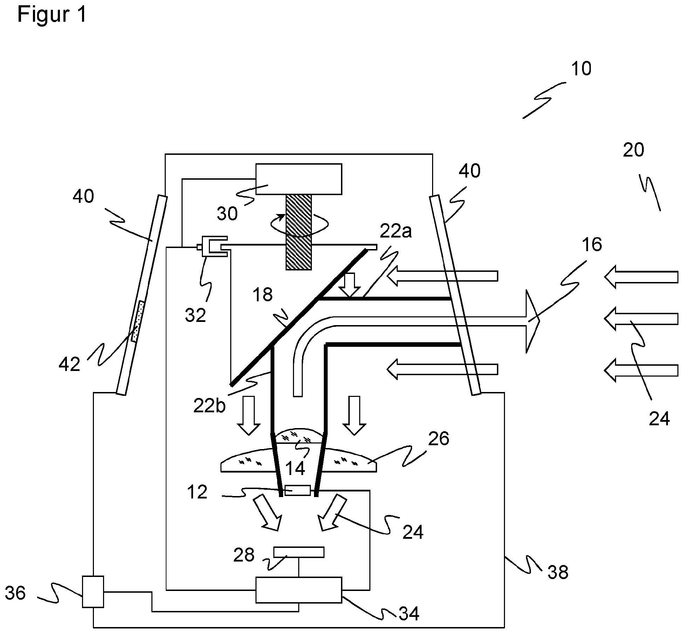

Fig. 1 zeigt eine schematische Schnittdarstellung durch einen erfindungsgemäßen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt. Der Sendestrahlengang ist von einer Abschirmeinrichtung hier in Form eines ein- oder zweiteiligen Sendetubus' 22a-b umgeben, um ein optisches Übersprechen innerhalb des Laserscanners 10 zu unterdrücken. Zumindest der in Richtung des Überwachungsbereichs 20 gerichtete Teil 22a des Sendetubus' ist mit der Ablenkeinheit 18 mitbewegt.

Trifft der Sendelichtstrahl 16 in dem Überwachungsbereich 20 auf ein Objekt, so gelangt Empfangslicht 24 mit dem remittierten Sendelicht wieder zu dem Laserscanner 10 zurück. Über die Ablenkeinheit 18 wird das Empfangslicht 24 auf eine Empfangsoptik 26 umgelenkt und dort auf einen Lichtempfänger 28 gebündelt. Der Lichtempfänger 28 wandelt das einfallende Empfangslicht 24 in ein elektrisches Empfangssignal und weist beispielsweise mindestens eine Photodiode oder für höhere Empfindlichkeit mindestens eine Lawinenphotodiode (APD) beziehungsweise eine Anordnung mit mindestens einer Einzelphotonlawinendiode (SPAD, Single-Photon Avalanche Diode, oder SiPM, Silicon Photomultiplier) auf.

Der dargestellte Sende- und Empfangsstrahlengang einschließlich der Ausgestaltung von Sendeoptik 14, Ablenkeinheit 18 und Empfangsoptik 26 ist rein beispielhaft zu verstehen. Bei dem dargestellten Laserscanner 10 befindet sich der Lichtsender 12 und dessen Sendeoptik 14 in einer zentralen Öffnung der Empfangsoptik 26. Folglich befindet sich der Sendetubus 22a-b mittig im Strahlengang des Empfangslichts 24. Dies ist nur eine beispielhafte Möglichkeit der Anordnung. Die Erfindung umfasst alternative koaxiale Lösungen, einschließlich solcher mit einem eigenen Spiegelbereich der Ablenkeinheit 18 für den Sendelichtstrahl 16 sowie zusätzlicher Umlenkung oder einem Teilerspiegel für dessen Einkopplung. Auch eine biaxiale Anordnung ist denkbar.

Die Ablenkeinheit 18 wird von einem Motor 30 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. An der Ablenkeinheit 18 ist eine Winkelmesseinheit 32 angeordnet, um die jeweilige Winkelstellung der Ablenkeinheit 18 zu erfassen. Die Winkelmesseinheit 32 wird hier beispielhaft von einer Strichscheibe als Winkelmaßverkörperung und einer Gabellichtschranke als Abtastung gebildet.

Eine Steuer- und Auswertungseinheit 34 ist mit dem Lichtsender 12, dem Lichtempfänger 28, dem Motor 30 und der Winkelmesseinheit 32 verbunden, insbesondere durch Verbindungen zwischen Leiterkarten mit der jeweiligen Elektronik. Durch Bestimmen der Lichtlaufzeit zwischen Aussenden des Sendelichtstrahls 16 und Empfang von Empfangslicht 24 wird unter Verwendung der Lichtgeschwindigkeit auf die Entfernung eines angetasteten Objektes von dem Laserscanner 10 geschlossen. Die jeweilige Winkelstellung, unter welcher dabei der Sendelichtstrahl 16 ausgesandt wurde, ist der Auswertungseinheit 34 von der Winkelmesseinheit 32 bekannt.

Somit stehen nach jeder Scanperiode über den Winkel und die Entfernung zweidimensionale Polarkoordinaten der Objektpunkte in dem Überwachungsbereich 20 zur Verfügung, und entsprechende Messdaten können über eine Schnittstelle 36 übertragen werden, wobei die Schnittstelle 36 stellvertretend für eine oder mehrere Schnittstellen steht. Die Schnittstelle 36 kann umgekehrt für eine Parametrierung oder sonstigen Datenaustausch zwischen Laserscanner 10 und Außenwelt genutzt werden. Die Schnittstelle 36 kann für die Kommunikation in einem oder mehreren herkömmlichen Protokollen ausgelegt sein, wie IO-Link, Ethernet, Profibus, USB3, Bluetooth, WLAN, LTE, 5G und vielen weiteren. Bei Anwendungen in der Sicherheitstechnik kann die Schnittstelle 36 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

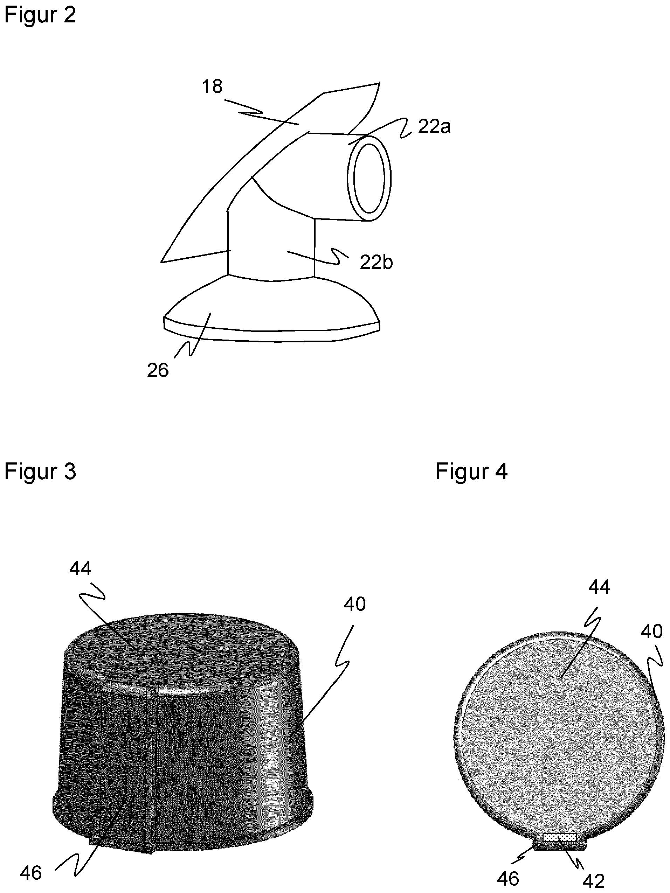

Der Laserscanner 10 ist in einem Gehäuse 38 untergebracht, das eine umlaufende Frontscheibe 40 insbesondere in Form einer Art transparenten Haube aufweist, die den oberen Teil des Gehäuses 38 bildet. In einem rückwärtigen Winkelbereich, der gescannt wird, wenn sich die Ablenkeinheit 18 gegenüber der Darstellung in Figur 1 um etwa 180° weitergedreht hat, ist ein Referenzziel 42 angeordnet, vorzugsweise wie angedeutet zumindest teilweise in der Frontscheibe 40 versenkt. Die Auslegung des Referenzziels 42 insbesondere im Hinblick auf Geometrie und Anordnung wird später unter Bezugnahme auf die Figuren 3 bis 11 genauer erläutert.

Wenn im Betrieb des Laserscanners 10 die Ablenkeinheit 18 den Sendelichtstrahl 16 in die entsprechenden rückwärtigen Ablenkwinkel richtet, wird kein Teil des Überwachungsbereichs 20 abgetastet, sondern das Referenzziel 42 getroffen. Für die eigentliche Messung sind diese Ablenkwinkel daher ein Totbereich. Dafür ist aber nicht das Referenzziel 42 ursächlich, es nutzt den Totbereich nur sinnvoll aus, denn ein gewisser Winkelbereich wird in dem Laserscanner 10 rein konstruktiv insbesondere zur Halterung des Motors 30 benötigt.

Das Referenzziel 42 ermöglicht verschiedene Referenzmessungen, die sich unter den Überschriften Funktionstest und Kalibrierung zusammenfassen lassen, wobei nur ein Funktionstest, nur eine Kalibrierung oder beides implementiert sein kann. Ein Funktionstest basiert auf bekannten Remissionseigenschaften und einem bekannten Abstand des Referenzziels 42. Daher ist es möglich, beispielsweise in der Endfertigung in der Steuer- und Auswertungseinheit 34 oder einem angeschlossenen Speicher eine Erwartungshaltung an das Referenzsignal zu speichern. Dies betrifft insbesondere den Abstand des Referenzziels 42, den eine Lichtlaufzeitmessung aus dem Referenzsignal liefern sollte, sowie einen Pegel des Referenzsignals. Stimmt eine Referenzmessung mit dieser Erwartungshaltung über ein toleriertes Maß hinaus nicht überein, so kann eine Fehlermeldung oder Wartungsanforderung ausgegeben werden. In sicherheitstechnischer Anwendung wird ein Sicherheitssignal ausgegeben, um beispielsweise eine überwachte Maschine in einen sicheren Zustand zu überführen. Eine Kalibrierung dient dem Ausgleich von Driften beispielsweise durch Temperatureffekte oder Alterung. Dazu wird insbesondere das Referenzsignal als Zeitnullpunkt verwendet oder mit einer Lichtlaufzeit auf dem Referenzpfad die eigentliche Lichtlaufzeitmessung korrigiert.

Figur 2 zeigt zur erleichterten Veranschaulichung eine dreidimensionale Ansicht des Sendetubus' 22a-b. In dieser beispielhaften Ausführungsform ist der Sendetubus 22a-b L-förmig ähnlich einem Periskop gestaltet und umgibt den gesamten Sendestrahlengang innerhalb des Laserscanners 10.

Die Figuren 3 und 4 zeigen die Frontscheibe 40 beziehungsweise die davon gebildete Haube des Gehäuses 38 des Laserscanners 10 in einer dreidimensionalen Ansicht und einer Draufsicht. In dieser Ausführungsform ist die Frontscheibe 40 oben einstückig mit einem Haubendeckel 44 geschlossen. Das Material der Frontscheibe 40 ist zumindest in den Durchtrittsbereichen von Sendelichtstrahl 16 und Empfangslicht 24 für den typischerweise infraroten Wellenlängenbereich des Lichtsenders 12 transparent.

Die Frontscheibe 40 ist vorzugsweise rotationssymmetrisch geformt. Die Symmetrieachse entspricht einer Drehachse der Ablenkeinheit 18. In einer Höhen- oder Elevationsrichtung ist eine Neigung vorgesehen, so dass sich insgesamt eine Kegelstumpfform ergibt. Alternativ sind zylindrische, kugelförmige und sonstige Formen mit komplexeren Konturen insbesondere in Höhenrichtung vorstellbar. An ihrer Rückseite im Totbereich der Abtastung weist die Frontscheibe 40 in Abweichung von der Rotationssymmetrie einen Steg 46 auf. In diesem Steg 46 ist das Referenzziel 42 zumindest teilweise oder vollständig untergebracht.

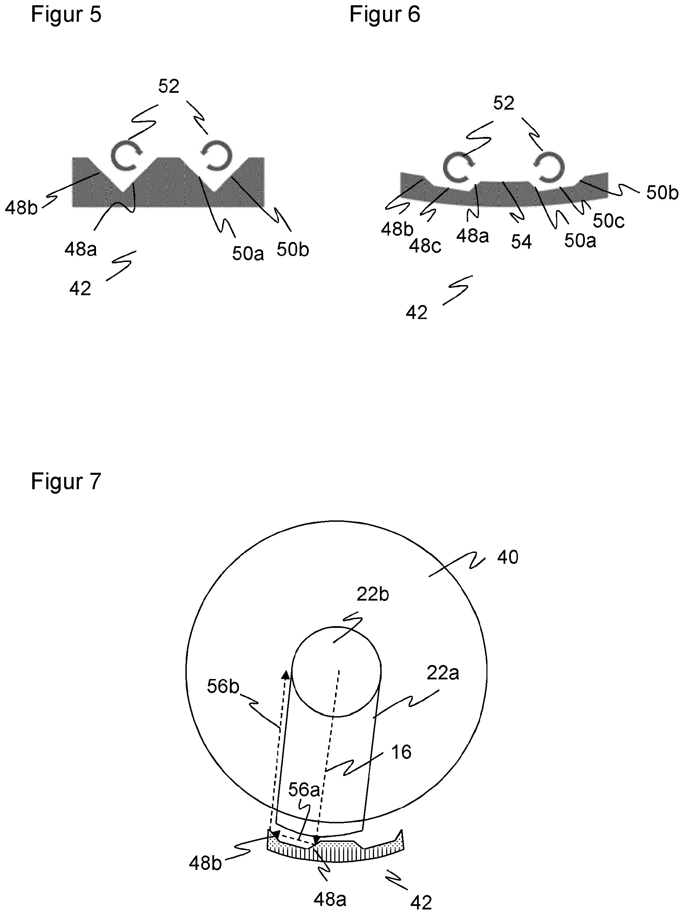

Figur 5 zeigt ein Referenzziel 42, das den darauf treffenden Sendelichtstrahl 16 mit einem seitlichen Versatz an dem Sendetubus 22a-b vorbei zu der Ablenkeinheit 18 zurückwirft. Ausgangspunkt der geometrischen Überlegung ist ein Vollkörper, aus dem zwei Segmente mit einem 90°-Winkel ausgeschnitten werden. Dadurch entstehen zwei Umlenkungselemente mit jeweils zwei schräg stehenden Flächen 48a-b, 50a-b seitlich an den Kerben, die durch das Ausschneiden der beiden Segmente verbleiben. Mit zwei Pfeilen 52 ist eine gezielte Rotation angedeutet, mit der die Schräglage angepasst werden kann, damit das Referenzziel 42 nur in einem ausgewählten Bereich von Ablenkwinkeln angetastet wird. Es ist nämlich von Vorteil, wenn jeweils zwischen der Erfassung des Referenzziels 42 und dem eigentlichen Messbereich noch ein Teil echte Totzone verbleibt, um reale Objekte und das Referenzziel 42 deutlich voneinander zu unterschieden.

Das in Figur 5 gezeigte Referenzziel 42 erfüllt seine Aufgabe, beansprucht aber noch einen vergleichsweise hohen Bauraum. Die Frontscheibe 40 und ihr Steg 46 weisen nur eine begrenzte Dicke auf. Insbesondere bei Herstellung im Spritzguss sind Flusslinien zu berücksichtigen, die den Raum begrenzen, der für das Referenzziel 42 freigegeben werden kann. Daher ist in einer bevorzugten Ausführungsform der Erfindung ein besonders flaches Design des Referenzziels 42 angestrebt.

Figur 6 zeigt ein flaches Referenzziel 42, das Bauraum beziehungsweise Bauhöhe einspart. Die in Figur 5 noch nach oben ragenden Ecken werden für eine flache Bauweise beschnitten. Zugleich wird vorzugsweise die in Figur 5 noch quaderförmige Hüllform verbessert, um zusätzlichen Bauraum einzusparen. Das flache Referenzziel 42 gemäß Figur 6 wird dazu der Krümmung und Neigung der Frontscheibe 40 angepasst

Durch das Abschneiden der oberen Ecken verkürzen sich die schräg stehenden Flächen 48a-b, 50a-b, die nun durch ebene, nicht schräg stehende Bereiche 48c, 50c voneinander getrennt sind. Zudem entsteht ein zentraler ebener Bereich 54 zwischen den beiden Umlenkungselementen oder Kerben. In diesen ebenen Bereichen 48c, 50c, 54 wird der auftreffenden Sendelichtstrahl nicht umgelenkt, sondern direkt in den Sendetubus 22a-b zurückgeworfen. Daher ist das Referenzziel 42 für den Lichtempfänger 28 in den zugehörigen Ablenkwinkeln nicht sichtbar, es entsteht kein Referenzsignal. Das flache Referenzziel 42 hat demnach zusätzlich die Funktion, den Scanwinkelbereich einzuschränken, in dem das Referenzziel 42 sichtbar ist. Die Geometrie, insbesondere die Schräglage der Flächen 48a-b, 50a-b und deren gegenseitiger Abstand aufgrund der Breite der ebenen Bereiche 48c, 50c, 54 ist anpassbar, um das Referenzziel 42 in anderen, längeren oder kürzeren Winkelbereichen zu erfassen.

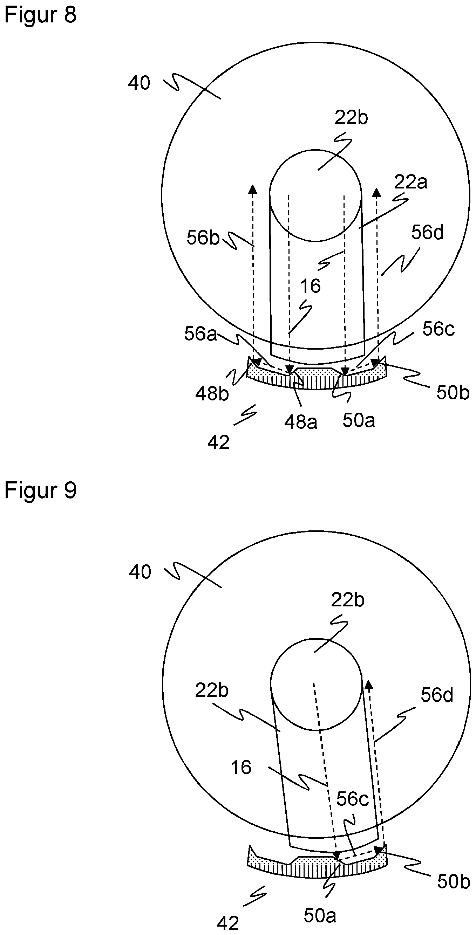

Die Figuren 7 bis 9 illustrieren den Strahlengang an dem Referenzziel 42 gemäß Figur 6 während einer Scanbewegung der Ablenkeinheit 18 gegen den Uhrzeigersinn, nämlich in Figur 7 zu Beginn des Überstreichens des Referenzziels 42, in Figur 8 in einer zentralen Winkelstellung während des Überstreichens und in Figur 9 gegen Ende des Überstreichens. Die jeweiligen Ablenkwinkel der Figuren 7 und 9, in denen das Referenzziel 42 zuerst beziehungsweise gerade noch erfasst wird, weil der Sendelichtstrahl 16 im passenden Winkel auf zumindest eine der schräg stehenden Flächen 48a, 50a fällt, liegen hier beispielhaft bei 174° und 186°/-174°, wobei 0° zentral im Messbereich bei 12 Uhr definiert ist und dementsprechend Figur 8 die komplementäre Stellung bei 180° illustriert.

Die Geometrie des Referenzziels 42 ist so ausgelegt, dass in den erläuterten passenden Winkelstellungen der Ablenkeinheit 18 zumindest ein Teilbündel des Sendelichtstrahls 16 zunächst einen mittels der schrägen Flächen 48a, 50a gegen die Scanrichtung beziehungsweise mit der Scanrichtung umgelenkten Referenzlichtstrahl 56a;c und dann einen seitlich um die Breite der flachen Bereiche 48c, 50c versetzten und eng außen am Sendetubus 22a-b geführten zurückkehrenden Referenzlichtstrahl 56b;d erzeugt. Je nach Ablenkwinkel geschieht dies an der in Scanrichtung zuerst angetasteten Seite des Referenzziels 42 wie in Figur 7, zu beiden Seiten wie in Figur 8 oder an der in Scanrichtung zuletzt angetasteten Seite des Referenzziels 42 wie in Figur 9.

Durch die flache Bauweise des Referenzziels 42 ist es möglich, den Sendetubus 22a-b ganz dicht mit nur minimalem Luftspalt an die Frontscheibe 40 heranzuführen und so eine effektive Abschirmfunktion zu erzielen. Der Sendetubus 22a-b kann seine Bewegung im Winkelbereich des Referenzziels 42 ungehindert fortsetzen, das Referenzziel 42 erfüllt seine zugedachte Funktion und beansprucht keinen merklichen Bauraum, der eine radiale Vergrößerung der Frontscheibe 40 und damit des Laserscanners 10 erforderlich machte.

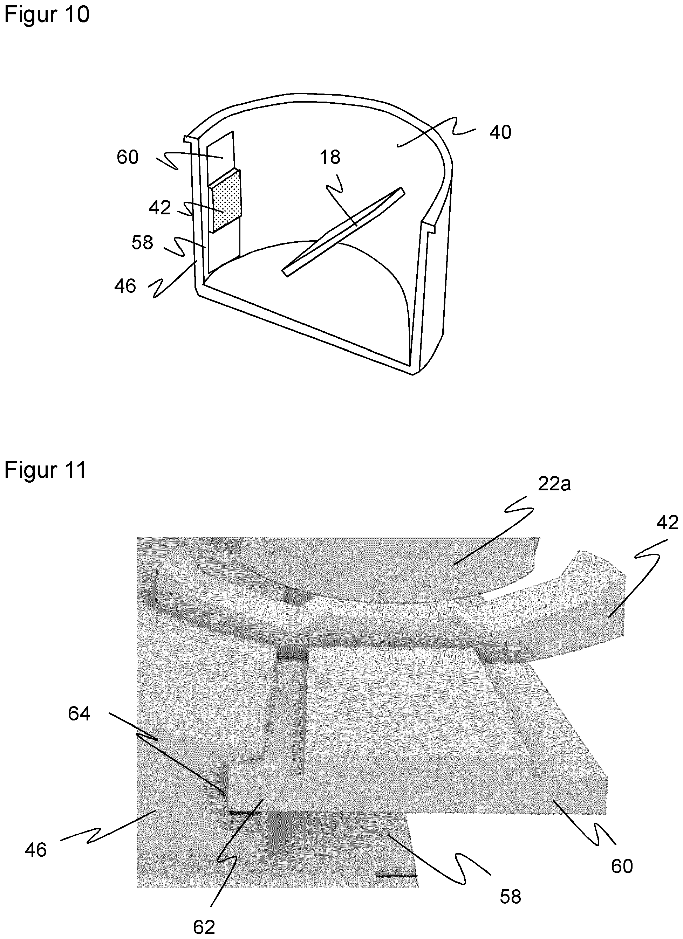

Die Figuren 10 und 11 illustrieren in einer dreidimensionalen Ansicht ein weiteres Mal die Frontscheibe 40 beziehungsweise in einer Detailansicht die Anordnung und eine mögliche Halterung des Referenzziels 42. Der Steg 46 der Frontscheibe 40 weist vorzugsweise eine innere Tasche 58, Nut oder Aussparung auf. Die innere Tasche 58 kann sich je nach Ausführungsform über die gesamte Höhe des Stegs 46, nur vom Haubendeckel 44 bis zur Unterkante des Referenzziels 42 oder lediglich im Bereich des Referenzziels 42 selbst erstrecken. Eine innere Tasche 58 ist prinzipiell auch ohne einen Steg 46 der Frontscheibe 40 vorstellbar, dort lässt aber die Dicke der Frontscheibe 40 vergleichsweise wenig Spielraum dafür, und der Steg 46 wird in vielen Laserscannern 10 ohnehin aus anderen Gründen als die Referenzmessung benötigt.

Durch ein wenigstens teilweises Versenken des Referenzziels 42, vorzugsweise in Kombination mit dessen flacher Ausgestaltung, nimmt das Referenzziel 42 keinen zusätzlichen Raum im Bewegungsbereich des Sendetubus' 22a-b ein. Unter Berücksichtigung von Toleranzen und eines Luftspalts zur Vermeidung von Reibung kann daher der Sendetubus 22a-b besonders dicht an die Frontscheibe 40 herangeführt werden.

Zur Fixierung des Referenzziels 42 kann dieses ein Halteelement 60 aufweisen beziehungsweise damit verbunden sein, das der Neigung der Frontscheibe 40 folgt und in die innere Tasche 58 eingeschoben wird. Das Halteelement 60 weist Kanten 62 auf, mit denen es in Hinterschneidungen 64 oder eine Führungsrille eingeschoben oder dort verrastet wird. Derartige Kanten oder eine rückseitige geeignete Geometrie kann das Referenzziel 42 selbst aufweisen, um es in der inneren Tasche 58 zu haltern. Es ist bevorzugt, wenn das Halteelement 60 und/oder das Referenzziel 42 den Steg 46 wie in Figur 11 überlappt und dadurch dessen Kanten bezüglich des Inneren des Laserscanners 10 verdeckt. Dadurch wird ungewolltes Streulicht, das an einer beliebigen Stelle der Frontscheibe 40 einkoppelt und an diesen Kanten wieder auskoppelt, von dem Empfangskanal abgeschirmt. Verbleibender Raum in dem Steg 46 beziehungsweise der inneren Tasche 58 dient als Führung für Leitungen in den oberen Bereich des Laserscanners 10, insbesondere zur Versorgung und Ansteuerung von Motor 30 und Winkelmesseinheit 32.

In Figur 11 ist das Referenzziel 42 scheint es, als rage das Referenzziel 42 noch etwas in den Innenraum der Frontscheibe 40 hinein. Das ist jedenfalls in diesem Ausmaß darstellungsbedingt, um die Einbettung in das Halteelement 60 besser erkennen zu lassen. Das Referenzziel 42 ist wie vielfach ausgeführt so ausgebildet und angeordnet, dass der Sendetubus 22a ganz dicht an die Frontscheibe 40 herangeführt werden kann, man sollte sich also das Referenzziel 42 in Figur 11 flacher und/oder tiefer versenkt vorstellen.

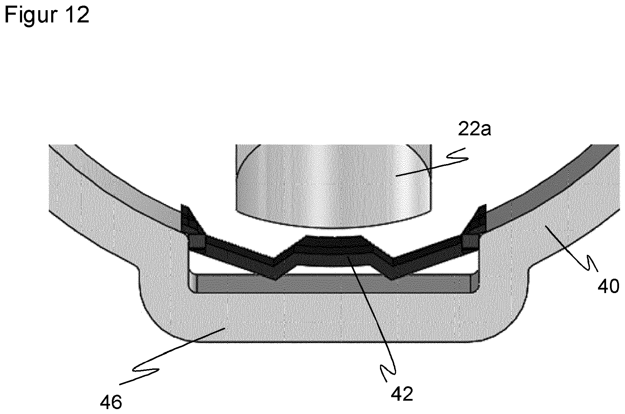

Figur 12 zeigt eine weitere mögliche Ausgestaltung und Anordnung des Referenzziels 42. Durch Anordnen in dem Steg 46 ist das Referenzziel 42 keinerlei Hindernis für den Sendetubus 22a. Es ist denkbar, dem Referenzziel eine gewisse laterale Spannung zu geben, so dass es von selbst in dem Steg 46 in der gewünschten Position verbleibt, beziehungsweise es am Rand mit der Innenkante des Stegs 46 zu verrasten. Dabei ist ein gewisser Überstand möglich, um die Innenkanten zu verdecken.

## Patentansprüche

1. Optoelektronischer Sensor (10), insbesondere Laserscanner, zur Erfassung von Objekten in einem Überwachungsbereich (20), wobei der Sensor (10) einen Lichtsender (12) zum Aussenden von Sendelicht (16), eine bewegliche Ablenkeinheit (18) zur periodischen Ablenkung des Sendelichts (16), einen Lichtempfänger (28) zum Erzeugen eines Empfangssignals aus von Objekten in dem Überwachungsbereich (20) remittiertem Sendelicht (24), eine mindestens teilweise mit der Ablenkeinheit (18) mitbewegte, um den Strahlengang des Sendelichts (16) angeordnete Abschirmeinrichtung (22), um ein Übersprechen des Sendelichts (16) auf den Lichtempfänger (28) zu unterdrücken, eine Steuer- und Auswertungseinheit (34) zur Erfassung von Informationen über Objekte in dem Überwachungsbereich (20) anhand des Empfangssignals, eine umlaufende Frontscheibe (40) für den Lichtaustritt des Sendelichts (16) sowie ein Referenzziel (42) für einen Funktionstest und/oder eine Kalibrierung des Sensors (10) aufweist, wobei das Referenzziel (42) durch seine Bauform und/oder Anordnung für eine nahe herangeführte Vorbeibewegung der Abschirmeinrichtung (22) ausgebildet ist,
**dadurch gekennzeichnet,**
**dass** das Referenzziel (42) mindestens teilweise in einer inneren Tasche (58) der Frontscheibe (40) versenkt angeordnet ist.

2. Sensor (10) nach Anspruch 1,
wobei die Abschirmeinrichtung (22) als ein das Sendelicht (16) mindestens teilweise umgebender Sendetubus ausgebildet ist und/oder wobei Lichtsender (12) und Lichtempfänger (28) koaxial angeordnet sind, insbesondere die Abschirmeinrichtung (22) mittig im Strahlengang des remittierten Sendelichts (24) liegt.

3. Sensor (10) nach Anspruch 1 oder 2,
wobei das Referenzziel (42) mindestens ein Umlenkelement (48, 50) zum Zurückwerfen des Sendelichts (16) mit einem seitlichen Versatz aufweist, insbesondere ein erstes Umlenkelement (50a-b) zum Zurückwerfen des Sendelichts (16) mit einem seitlichen Versatz in Bewegungsrichtung der Ablenkeinheit (18) und ein zweites Umlenkelement (48a-b) zum Zurückwerfen des Sendelichts (16) mit einem seitlichen Versatz entgegen der Bewegungsrichtung der Ablenkeinheit (18) aufweist.

4. Sensor (10) nach Anspruch 3,
wobei das Umlenkelement (48, 50) eine erste Kontur (48a, 50a) zur seitlichen Ablenkung und eine dagegen seitlich versetzte zweite Kontur (48b, 50b) zum Zurückwerfen des Sendelichts (16) aufweist.

5. Sensor (10) nach einem der vorhergehenden Ansprüche,
wobei die Abschirmeinrichtung (22) fast berührend an die Frontscheibe (40) herangeführt ist.

6. Sensor (10) nach einem der vorhergehenden Ansprüche,
wobei das Referenzziel (42) nicht über eine Innenkontur der Frontscheibe (40) hinaus nach innen ragt, insbesondere die Innenkontur der Frontscheibe (40) fortsetzt.

7. Sensor (10) nach einem der vorhergehenden Ansprüche,
wobei das Referenzziel (42) in einer Scanrichtung der Bewegung der Ablenkeinheit (18) einer Krümmung der Frontscheibe (40) und in einer Höhenrichtung senkrecht dazu einer Neigung der Frontscheibe (40) entsprechend geformt ist.

8. Sensor (10) nach einem der vorhergehenden Ansprüche,
wobei das Referenzziel (42) Kanten (62) und die innere Tasche (58) Hinterschneidungen (64) aufweist, mit denen das Referenzziel (42) in der inneren Tasche (58) gehalten wird.

9. Sensor (10) nach einem der vorhergehenden Ansprüche,
wobei die Frontscheibe (40) einen vertikalen, aus einer umlaufenden Kontur herausragenden Steg (46) aufweist, in dem die innere Tasche (58) angeordnet ist, wobei insbesondere in dem Steg (46) Verbindungsleitungen des Sensors (10) angeordnet sind.

10. Sensor (10) nach Anspruch 9,
wobei das Referenzziel (42) eine hinreichende Ausdehnung aufweist und derart angeordnet ist, dass damit Kanten des Steges (46) verdeckt sind.

11. Sensor (10) nach einem der vorhergehenden Ansprüche,
wobei das Referenzziel (42) flach ausgebildet ist.

12. Sensor (10) nach einem der vorhergehenden Ansprüche,
wobei die bewegliche Ablenkeinheit (18) als Drehspiegel mit einer Spiegelfläche ausgebildet ist.

13. Sensor (10) nach einem der vorhergehenden Ansprüche,
wobei die Steuer- und Auswertungseinheit (34) dafür ausgebildet ist, aus einer Lichtlaufzeit zwischen Aussenden des Sendelichts (16) und Empfangen des remittierten Sendelichts (24) einen Abstand des Objekts zu bestimmen.

14. Verfahren zur Erfassung von Objekten in einem Überwachungsbereich (20), bei dem Sendelicht (16) durch eine umlaufende Frontscheibe (40) ausgesandt, mit Hilfe einer beweglichen Ablenkeinheit (18) periodisch abgelenkt, nach Remission an dem Objekt als remittiertes Sendelicht (24) wieder empfangen und von einem Lichtempfänger (28) in ein Empfangssignal gewandelt wird, um aus dem Empfangssignal eine Objektinformation zu erzeugen, wobei ein Übersprechen des Sendelichts (16) auf den Lichtempfänger (28) von einer mindestens teilweise mit der Ablenkeinheit (18) mitbewegten Abschirmeinrichtung (22) um den Strahlengang des Sendelichts (16) unterdrückt wird und mit Hilfe eines Referenzziels (42) ein Funktionstest und/oder eine Kalibrierung durchgeführt wird, wobei die Abschirmeinrichtung (22) nahe herangeführt an dem Referenzziel (42) vorbeibewegt wird, wobei das Referenzziel (42) durch seine Bauform und/oder Anordnung das nahe Vorbeibewegen zulässt,
**dadurch gekennzeichnet,**
**dass** das Referenzziel (42) mindestens teilweise in einer inneren Tasche (58) der Frontscheibe (40) versenkt angeordnet ist.

## Claims

1. An optoelectronic sensor (10), in particular laser scanner, for detecting objects in a monitoring area (20), the sensor (10) comprising a light transmitter (12) for transmitting transmitted light (16), a movable deflection unit (18) for periodically deflecting the transmitted light (16), a light receiver (28) for generating a received signal from remitted transmitted light (24) that is remitted by objects in the monitoring area (20), a shielding device (22) which is moved at least partially with the deflection unit (18) and is arranged around the beam path of the transmitted light (16) in order to suppress crosstalk of the transmitted light (16) to the light receiver (28), a control and evaluation unit (34) for detecting information about objects in the monitored area (20) on the basis of the received signal, a circumferential front window (40) for the light transmission of the transmitted light (16), and a reference target (42) for a function test and/or calibration of the sensor (10), wherein the reference target (42) is configured by its construction and/or arrangement for a closely approached passing movement of the shielding device (22),
**characterized in that** the reference target (42) is arranged at least partially recessed in an inner pocket (58) of the front window (40).

2. The sensor (10) according to claim 1,
wherein the shielding device (22) is formed as a transmitting tube at least partially surrounding the transmitted light (16) and/or wherein light transmitter (12) and light receiver (28) are arranged coaxially, in particular the shielding device (22) is arranged centrally in the beam path of the remitted transmitted light (24).

3. The sensor (10) according to claim 1 or 2,
wherein the reference target (42) comprises at least one deflection element (48, 50) for reflecting the transmitted light (16) with a lateral offset, in particular a first deflection element (50a-b) for reflecting the transmitted light (16) with a lateral offset in the direction of movement of the deflection unit (18) and a second deflection element (48a-b) for reflecting the transmitted light (16) with a lateral offset against the direction of movement of the deflection unit (18).

4. The sensor (10) according to claim 3,
wherein the deflecting element (48, 50) has a first contour (48a, 50a) for lateral deflection and a second contour (48b, 50b) offset laterally with respect thereto for reflecting back the transmitted light (16).

5. The sensor (10) according to any of the preceding claims,
wherein the shielding device (22) is brought almost in contact with the front window (40).

6. The sensor (10) according to any of the preceding claims,
wherein the reference target (42) does not project inwardly beyond an inner contour of the front window (40), in particular continues the inner contour of the front window (40).

7. The sensor (10) according to any of the preceding claims,
wherein the reference target (42) is shaped according to a curvature of the front window (40) in a scanning direction of movement of the deflection unit (18), and according to an inclination of the front window (40) in a height direction perpendicular thereto.

8. The sensor (10) according to any of the preceding claims,
wherein the reference target (42) has edges (62) and the inner pocket (58) has undercuts (64) for holding the reference target (42) in the inner pocket (58).

9. The sensor (10) according to any of the preceding claims,
wherein the front window (40) has a vertical web (46) projecting from a circumferential contour, in which the inner pocket (58) is arranged, wherein in particular connecting lines of the sensor (10) are arranged in the web (46).

10. The sensor (10) according to claim 9,
wherein the reference target (42) is of sufficient extent and is arranged to cover edges of the web (46).

11. The sensor (10) according to any of the preceding claims,
wherein the reference target (42) is flat.

12. The sensor (10) according to any of the preceding claims,
wherein the movable deflection unit (18) is configured as a rotating mirror with a mirror surface.

13. The sensor (10) according to any of the preceding claims,
wherein the control and evaluation unit (34) is configured to determine a distance of the object from a light time of flight between transmitting the transmitted light (16) and receiving the remitted transmitted light (24).

14. A method for detecting objects in a monitoring area (20), wherein transmitted light (16) is transmitted through a rotating front window (40), is periodically deflected with the aid of a movable deflection unit (18), is received again as remitted transmitted light (24) after remission at the object and is converted into a received signal by a light receiver (28) in order to generate object information from the received signal, wherein a crosstalk of the transmitted light (16) to the light receiver (28) is suppressed by a shielding device (22) around the beam path of the transmitted light (16) that is moved at least partially with the deflection unit (18), and a function test and/or calibration is carried out with the aid of a reference target (42), the shielding device (22) being moved past the reference target (42) in a manner such that it is brought close, the reference target (42) permitting the close passing movement by virtue of its construction and/or arrangement,
**characterized in that** the reference target (42) is arranged at least partially recessed in an inner pocket (58) of the front window (40).

## Revendications

1. Capteur optoélectronique (10), en particulier scanner laser, pour détecter des objets dans une zone à surveiller (20), le capteur (10) comprenant un émetteur de lumière (12) pour émettre de la lumière d'émission (16), une unité de déviation mobile (18) pour dévier périodiquement la lumière d'émission (16), un récepteur de lumière (28) pour générer un signal de réception à partir de la lumière d'émission (24) renvoyée par des objets dans la zone à surveiller (20), un dispositif de protection (22) se déplaçant au moins partiellement avec l'unité de déviation (18) et disposé autour du chemin optique de la lumière d'émission (16), afin de supprimer une diaphonie de la lumière d'émission (16) sur le récepteur de lumière (28), une unité de commande et d'évaluation (34) pour saisir des informations sur des objets dans la zone à surveiller (20) à l'aide du signal de réception, une vitre frontale périphérique (40) pour la sortie de la lumière d'émission (16), ainsi qu'une cible de référence (42) pour un test de fonctionnement et/ou un étalonnage du capteur (10), la cible de référence (42) étant conçue, de par sa forme de construction et/ou sa disposition, pour un mouvement du dispositif de protection (22) passant devant elle en se rapprochant près d'elle, **caractérisé en ce que**
la cible de référence (42) est disposée de façon encastrée au moins partiellement dans une poche intérieure (58) de la vitre frontale (40).

2. Capteur (10) selon la revendication 1,
dans lequel le dispositif de protection (22) est réalisé sous forme de tube d'émission entourant au moins partiellement la lumière d'émission (16), et/ou l'émetteur de lumière (12) et le récepteur de lumière (28) sont disposés coaxialement, en particulier le dispositif de protection (22) est situé au centre du chemin optique de la lumière d'émission renvoyée (24).

3. Capteur (10) selon la revendication 1 ou 2,
dans lequel la cible de référence (42) comporte au moins un élément de renvoi (48, 50) pour réfléchir la lumière d'émission (16) avec un décalage latéral, en particulier un premier élément de renvoi (50a-b) pour réfléchir la lumière d'émission (16) avec un décalage latéral dans la direction de mouvement de l'unité de déviation (18) et un deuxième élément de renvoi (48a-b) pour réfléchir la lumière d'émission (16) avec un décalage latéral dans le sens opposé à la direction de mouvement de l'unité de déviation (18).

4. Capteur (10) selon la revendication 3,
dans lequel l'élément de renvoi (48, 50) présente un premier contour (48a, 50a) pour la déviation latérale et un deuxième contour (48b, 50b), décalé latéralement par rapport au premier, pour la réflexion de la lumière d'émission (16).

5. Capteur (10) selon l'une des revendications précédentes,
dans lequel le dispositif de protection (22) est rapproché de la vitre frontale (40) de manière à la toucher presque.

6. Capteur (10) selon l'une des revendications précédentes,
dans lequel la cible de référence (42) ne dépasse pas au-delà d'un contour intérieur de la vitre frontale (40) vers l'intérieur, en particulier prolonge le contour intérieur de la vitre frontale (40).

7. Capteur (10) selon l'une des revendications précédentes,
dans lequel la cible de référence (42) a une forme qui, dans une direction de balayage du mouvement de l'unité de déviation (18), correspond à une courbure de la vitre frontale (40) et qui, dans une direction de hauteur perpendiculaire à celle-ci, correspond à une inclinaison de la vitre frontale (40).

8. Capteur (10) selon l'une des revendications précédentes,
dans lequel la cible de référence (42) présente des bords (62), et la poche intérieure (58) présente des contre-dépouilles (64) par lesquelles la cible de référence (42) est maintenue dans la poche intérieure (58).

9. Capteur (10) selon l'une des revendications précédentes,
dans lequel la vitre frontale (40) présente une barrette verticale (46) dépassant d'un contour périphérique, dans laquelle est disposée la poche intérieure (58),
en particulier, des lignes de connexion du capteur (10) sont disposées dans la barrette (46).

10. Capteur (10) selon la revendication 9,
dans lequel la cible de référence (42) présente une extension suffisante et est disposée de manière à masquer les bords de la barrette (46).

11. Capteur (10) selon l'une des revendications précédentes,
dans lequel la cible de référence (42) est plate.

12. Capteur (10) selon l'une des revendications précédentes,
dans lequel l'unité de déviation mobile (18) est réalisée sous forme de miroir rotatif avec une surface spéculaire.

13. Capteur (10) selon l'une des revendications précédentes,
dans lequel l'unité de commande et d'évaluation (34) est réalisée pour déterminer une distance de l'objet à partir d'un temps de vol de lumière entre l'émission de la lumière d'émission (16) et la réception de la lumière d'émission renvoyée (24).

14. Procédé de détection d'objets dans une zone à surveiller (20),
dans lequel une lumière d'émission (16) est émise à travers une vitre frontale périphérique (40), est déviée périodiquement à l'aide d'une unité de déviation mobile (18), est reçue, une fois renvoyée par l'objet, en tant que lumière d'émission renvoyée (24) et est convertie par un récepteur de lumière (28) en un signal de réception, afin de générer une information sur l'objet à partir du signal de réception,
dans lequel une diaphonie de la lumière d'émission (16) sur le récepteur de lumière (28) est supprimée par un dispositif de protection (22) se déplaçant au moins partiellement avec l'unité de déviation (18) et disposé autour du chemin optique de la lumière d'émission (16), et un test de fonctionnement et/ou un étalonnage est effectué à l'aide d'une cible de référence (42), le dispositif de protection (22) passe devant la cible de référence (42) en se rapprochant près d'elle, la cible de référence (42) permettant, de par sa forme de construction et/ou sa disposition, audit dispositif de passer près devant elle,
**caractérisé en ce que**
la cible de référence (42) est disposée de façon encastrée au moins partiellement dans une poche intérieure (58) de la vitre frontale (40).
